# EUROPEAN PATENT SPECIFICATION

(11) **EP 2 255 942 B1**
(45) Date of publication and mention of the grant of the patent: **20.03.2013**
(21) Application number: 09161361.2
(22) Date of filing: 28.05.2009
(51) Int. Cl.: B29C 37/04, B29C 65/20

(54) **Profile welding and deburring method**
Profilschweiß- und -entgratungsverfahren
Procédé d'ébarbage et de soudage de profil

(43) Date of publication of application: 01.12.2010
(73) Proprietor: Murat Makina Sanayi ve Ticaret Ltd. Sti., 34217 Istanbul (TR)
(72) Inventor: Buda, Murat, 34464, Istanbul (TR)
(74) Representative: Cayli, Hülya

(56) References cited:
- EP-A2- 0 531 682
- DE-A1- 2 035 308
- DE-B2- 2 106 109
- DE-U- 7 127 829
- US-A- 4 239 574

## Description

### Technical Field

The present invention relates to a method for weld-joining the frame profiles of doors, windows, and similar structures, as well as for removing burrs from, i.e. deburring, the welding site.

### Prior Art

Referring to the prior art, window or door frames made of plastic-based materials (typically PVC) for use at homes, offices, and similar places are subjected to various processes during manufacture. An important process among those is the one, in which the profiles are joined together by means of butt welding. In this method, the surfaces of profiles to be mutually-joined are heated with a "hot plate" and melted to some extent, whereafter the plate is removed such that these two surfaces are brought together and the welding process is completed. Burrs occur on the joint site with the material melting as a result of this process. Such burrs, leading to undesired appearances at the joint site, are removed by means of various cutting and picking devices and machines. It is important here, however, to conduct the welding and deburring processes in a rapid and clean manner, i.e. without leaving traces of the deburring process.

In the published patent application EP0531682 according to the prior art is disclosed a system, performing butt-welding for joining frame profiles, making use of deburring blades at the same time. The blades in the system disclosed in this application, however, are not capable of cleaning the entire surface of a profile. Additionally, there is not disclosed a special method, which would allow to perform a deburring operation without leaving any traces.

Similarly, the patent application DE2035308 according to the prior art describes a system for butt welding, but here too is disclosed nothing about a blade system deburring the entire surfaces of a profile or a deburring method, which leaves no process traces.

Also the DE2106109 discloses a similar system.

### Brief Description of Invention

The butt-welding and deburring method according to the present invention is used for turning plastic-based profiles into frames. A relating machine performs butt welding for joining the frame corners, and subsequently removes any material burrs emerging as a result of this joining operation. For deburring purposes, such kind of blades are used which cut the profiles' corner joints both from below and above. By forming such blades so as to grip the lower and upper surfaces of a profile, it becomes possible to cut or remove all visible welding burrs. Thanks to the cutting method which the blades perform during deburring, no deburring traces are left, resulting in a clean weld structure.

The operation manner of blades used for deburring those burrs which flow over the welding site during the butt welding operation of profiles is as follows. The upper blades disposed above the profiles are first leaned against the upper surface of profiles, and then are driven against the burrs. Before the burrs do not completely cool down and become solidified, the upper blades are reciprocated, displaced alternately back and forth at least once (preferably a multiple times) mutually, slimming down and weakening the burrs. After the burrs completely cool down and become solidified, the upper blades perform a final action, displacing against each other and removing the burrs, and subsequently, displacing upwards and leaving the profile's upper surface. Thus, the upper surface is deburred. Thanks to this deburring method, deburring traces are minimized and a clean welding site is achieved. At the same time, burrs are removed from the welding site by blowing air thereto with a blower mechanism.

### Objective of Invention

The objective of the present invention is to provide a method, which joins the door/window profiles by means of butt welding and performs a deburring process following the welding operation.

Another objective of the present invention is to provide a method, which performs welding and deburring operations in a rapid manner without leaving any process traces.

A further objective of the present invention is to provide a method, which is capable of removing the burrs at welding sites from the lower and upper surfaces of profiles.

Yet a further objective of the present invention is to provide a method, which performs weld-joining at the welding site in a smooth and aligned manner.

Still a further objective of the present invention is to provide a method, which does not leave any welding trace or minimizes them while deburring the welding site.

### Description of Figures

An exemplary profile welding and deburring machine is illustrated in annexed figures as described below in brief.
Figure 1 is a perspective illustration of a profile welding and deburring machine.
Figure 2 is a perspective illustration of a corner welding and deburring unit.
Figure 3 is a perspective illustration of the stationary head of the unit.
Figure 4 is another perspective illustration of the stationary head of the unit.
Figure 5 is a perspective illustration of the mobile head of the unit.
Figure 6 is another perspective illustration of the mobile head of the unit.
Figure 7 is another perspective illustration of the mobile head of the unit.
Figure 8 is a top illustration of the unit, without the stationary and mobile heads.
Figure 9 is a perspective illustration of the unit, without the stationary and mobile heads.
Figure 10 is another perspective illustration of the unit, without the stationary and mobile heads.
Figure 11 is another perspective illustration of the unit, without the stationary and mobile heads.
Figure 12 is a cross-sectional illustration of butt-welded profiles, prior to the deburring operation.

The parts in said figures are individually enumerated as following.
Profile welding and deburring machine (A)
Corner welding and deburring unit (1)
Stand (2)
Profile (3)
Stationary head (4)
Mobile head (5)
Profile alignment and heating mechanism (6)
Unit table (7)
Side thrust(41)
Leaning surface (42)
Column (43)
Actuator (44)
Upper presser plate (45)
Cutting mechanism (46)
Cutting blade (46')
Track (47)
Connection elements (48, 48')
Cutting blade (49)
Skid (50)
Track (50')
Side thrust (51)
Leaning surface (52)
Column (53)
Actuator (54)
Upper presser plate (55)
Cutting mechanism (56)
Cutting blade (56')
Track (57) Connection elements (58, 58')
Cutting blade (59)
Mobile thrust plate (61)
Actuator (62)
Skid (63) Track (63')
Heater plate (64)
Actuator (65)
Skid (66)
Track (66')
Holes (74)
Actuator (81)
Actuator (82)

### Description of Invention

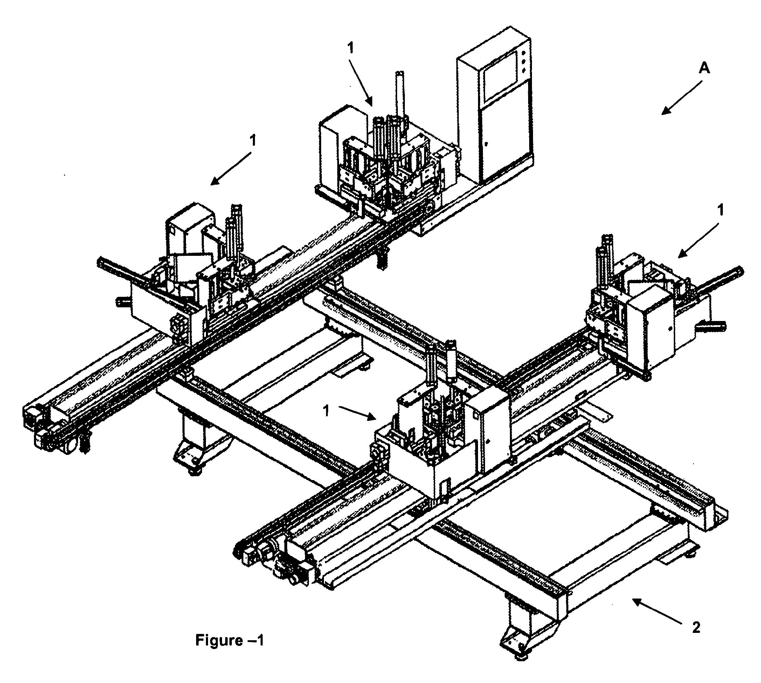

The profile welding and deburring machine (A), of which a general perspective illustration is given in Figure 1, is used for turning plastic-based profiles into frames. The subject machine (A) performs butt welding for joining the frame corners, and subsequently removes any material burrs emerging as a result of this joining operation. For deburring purposes, such kind of blades are used which cut the profiles' corner joints both from below and above. By forming such blades so as to grip the lower and upper surfaces of a profile, it becomes possible to cut or remove all welding burrs at the visible site. Thanks to the cutting method which the blades perform during deburring, deburring traces are minimized (or no deburring traces are left), resulting in a clean weld structure. The relevant features are described in detail as following.

The illustrative machine (A) shown in Figure (1) shows four corner welding and deburring units (1), (it is also possible to use at least one unit (1) according to the function of the machine (A)) as well as a stand (2) onto which these units (1) are situated. The positions of the units (1) on the stand (2) can be adjusted according to the length of profiles to be welded. It becomes thereby possible to perform the corner welding operation of frames of any desired dimension. The adjustment is made by displacing the units (1) over sliding bearings (not illustrated in figures) provided on the stand (2) as a whole.

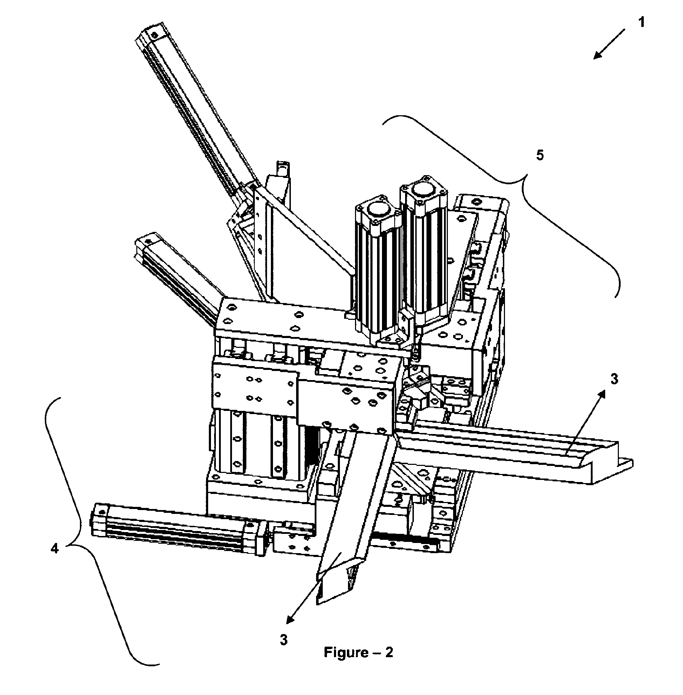

Figure 2 is a general perspective illustration of one said unit (1). Each unit (1) performs the butt welding and deburring operations of two adjacent ends of two profiles (3). These profiles (3) are welded mutually at a certain angle. Although the profiles (3) are welded together generally at a 90° angle, they may also be welded together by different angles. The unit (1) is equipped with two heads (4, 5), one stationary and the other mobile. Both heads (4, 5) grip one each profile (3) to be joined, wherein the mobile head (5) pushes the profile it holds towards the stationary head, allowing the butts of profiles (3) to approach each other and come butt-to-butt.

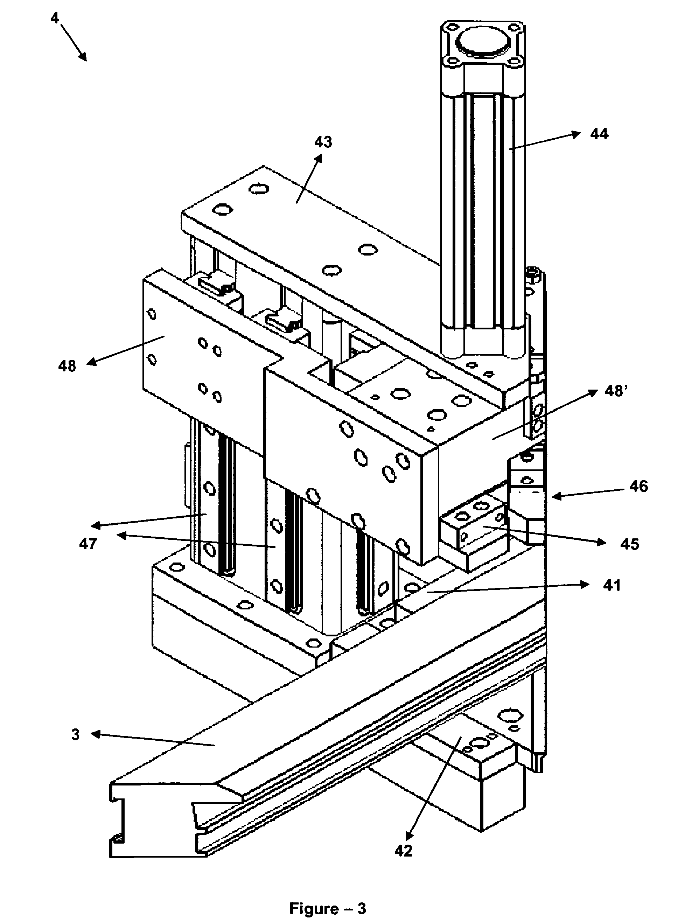

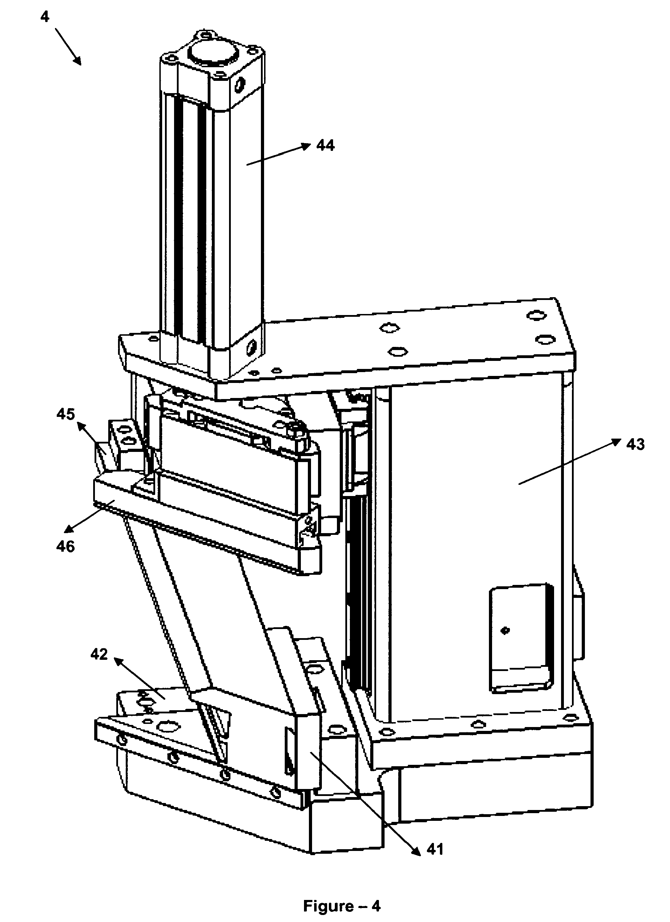

Figures 3 and 4 provide different perspective illustrations of the stationary head (4) with the respective profile (3). On the stationary head (4) are disposed a leaning surface (42), over which the profile's (3) lower side is placed, and a side thrust (41) to which is leaned a lateral surface of the same (3). Thus, the displacement of profile (3) is restricted at two directions and the profile is aligned. A column (43) is provided at the stationary head (4) and the profile (3) is clamped from above by an actuator (44) disposed on this column (43). With this purpose, an upper presser plate (45) provided under the actuator (44) exerts pressure to the profile (3) from above. Put differently, operating the actuator (44) makes the latter (44) push downwards the upper presser plate (45), which is coupled to the lower part of the actuator (44), so that the profile (3) is clamped from above. Thus the profile (3) is entirely restricted in terms of displacement. At one side of the upper presser plate (45) is provided a cutting mechanism (46) which is coupled to the tip of the actuator (44), and this mechanism (46) is used for deburring purposes. In order to ensure a smooth up- and downward displacement for the upper presser plate (45) and the cutting mechanism (46), these components are made cooperative with at least one track (47) disposed vertically at the lateral side of the column (43). In other words, these components (45, 46) are attached to connection elements (48, 48') disposed on the track (47) so as to slide down- and upwards. Additionally, a deburring blade (49) is disposed at one side of the leaning surface (42) for deburring the profiles from their lower surfaces.

The details and operation manner of the cutting mechanism (46) and of said blade (49) are given below.

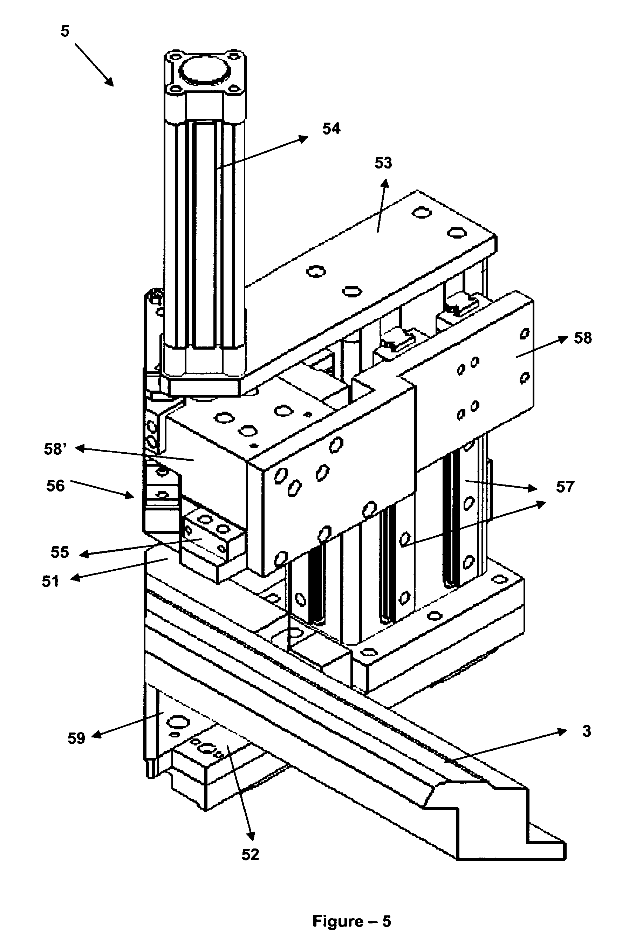

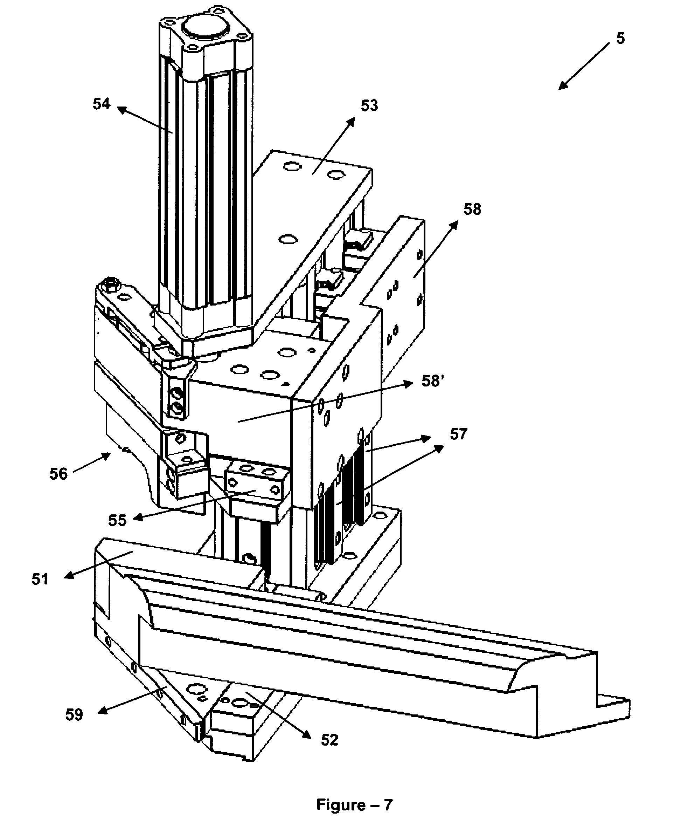

Figures 5 to 7 provide different perspective illustrations of the mobile head (4) with the respective profile (3). Although the mobile head (5) possess the same mechanical components and features with the stationary head (4), it has an extra feature which the stationary head (4) does not possess. This feature allows the mobile head (5) to move as a whole towards and away from the stationary head (4). This feature, actually, is a requirement for carrying out a butt welding operation.

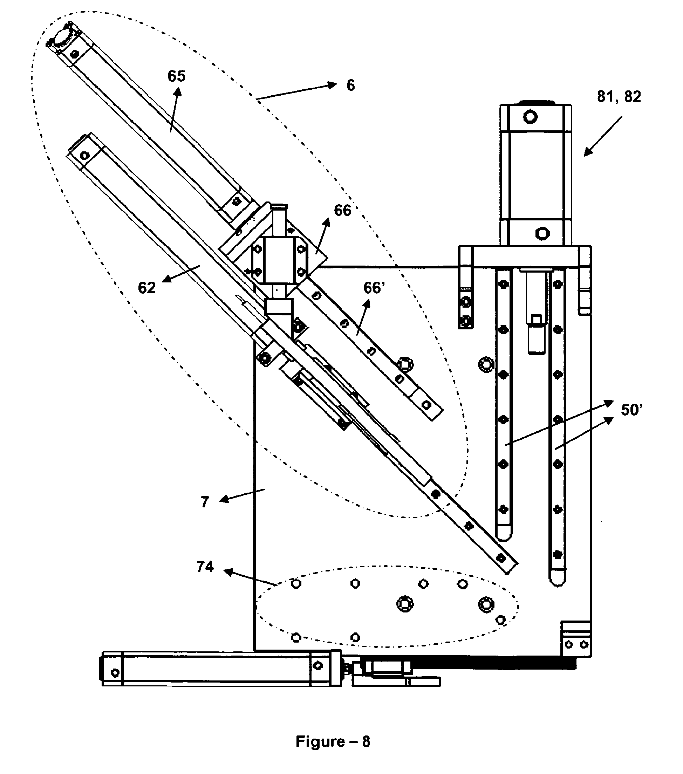

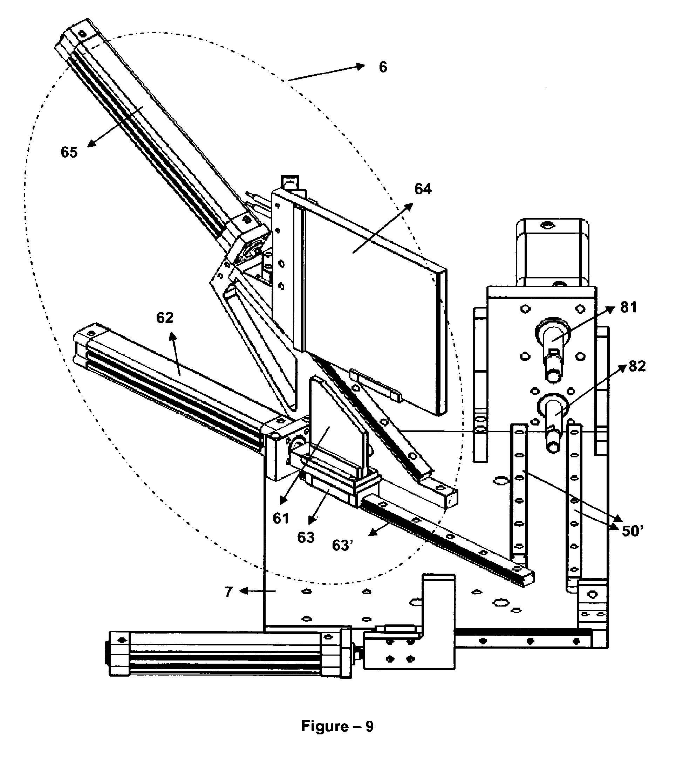

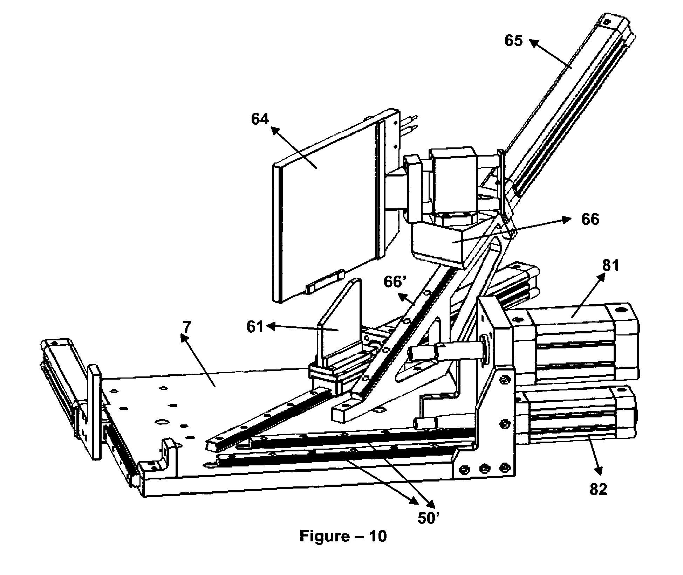

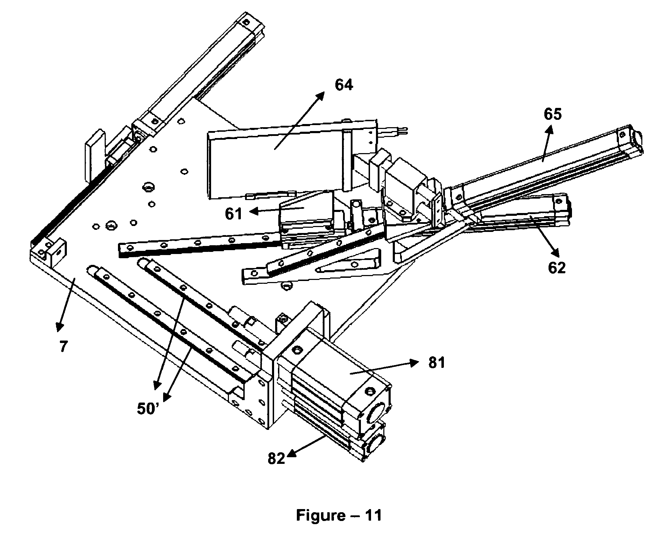

On the mobile head (5) are disposed a leaning surface (52), over which the profile's (3) lower side is placed, and a side thrust (51) to which is leaned a lateral surface of the same (3). Thus, the displacement of profile (3) is restricted at two directions and the profile is aligned. A column (53) is provided at the mobile head (5) and the profile (3) is clamped from above by an actuator (54) disposed on this column (43). With this purpose, an upper presser plate (55) provided under the actuator (54) exerts pressure to the profile (3) from above. Put differently, operating the actuator (54) makes the latter (54) push downwards the upper presser plate (55), which is coupled to the lower part of the actuator (44), so that the profile (3) is clamped from above. Thus the profile (3) is entirely restricted in terms of displacement. At one side of the upper presser plate (55) is provided a cutting mechanism (56) which is coupled to the tip of the actuator (54) and this mechanism (56) is used for deburring purposes. In order to ensure a smooth up- and downward displacement for the upper presser plate (55) and the cutting mechanism (56), these components are made cooperative with at least one track (57) disposed vertically at the lateral side of the column (53). In other words, these components (55, 56) are fastened to connection elements (58, 58') disposed on the track (57) so as to slide down- and upwards. In addition, a deburring blade (59) is disposed aside to the leaning surface (52) for deburring the profiles from their lower surfaces. The details and operation manner of the cutting mechanism (56) and of said blade (59) are given below. Furthermore, at least one skid (50) is disposed at the lower surface of the mobile head (5), this skid (50) being supported by respective tracks (50') provided on the unit table (7) (illustrated in figures 8 to 11).

Figures 8 to 11 provide perspective illustrations of the unit (1) from above without the stationary (4) and mobile heads (5). The stationary and mobile heads (4, 5) are coupled onto the unit table (7) illustrated here. While the stationary head (4) is fastened by means of the holes (74) provided on the table (7), the mobile head (5) is supported by the tracks (50') on the table by means of the skids (50), as indicated above. A profile adjustment and heating mechanism (6) is also provided on the table (7). In this mechanism (6) is provided a mobile thrust plate (61), whereto the butts of profiles to be joined are leaned against before the butt welding operation is started. The mobile thrust plate (61) can be displaced back and forth by means of an actuator (62). Thus, once it is withdrawn from between the profiles, it is returned to its former position prior to welding. In order to provide a smooth displacement for the mobile thrust plate (61), it is placed on a skid (63). And the skid (63) is in turn supported by a track (63') on the table (7).

Another important component of the mechanism (6) is the heater plate (64), this plate being arranged so as to displace over the same plane with the thrust plate (61). The heater plate (64) is likewise displaced by means of an actuator (65). The heater plate (64) is coupled to a skid (66), this skid (66) being supported by a track (66'). The track (66') shown in Figures 8-11 is fixed to the table (7) in an inclined manner, decreasing in elevation towards the profiles' joint site. After the mobile thrust plate (61) leaves the site between the profiles, the heater plate (64) is driven into this gap. The heater plate (64) displaces on the same plane with the thrust plate (66) (but angularly downwards) and becomes situated in said gap, heating the butt surfaces of profiles here.

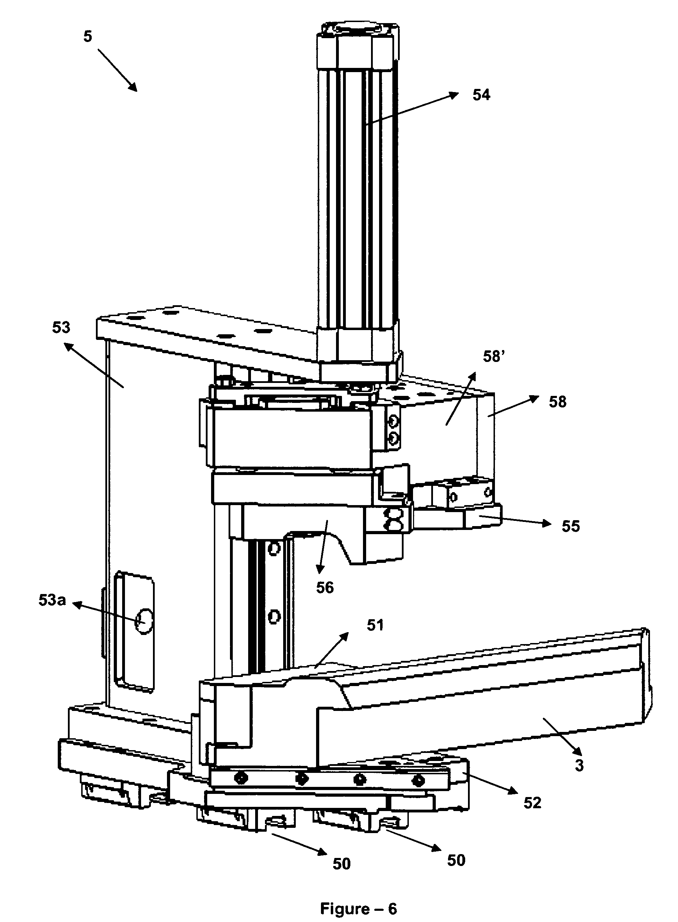

As illustrated in figure 8 to 11, two actuators (81, 82) are disposed at one side of the unit (1). One of them (81) is used to reciprocate, i.e. displace back and forth the mobile head (5) over the directions of tracks (50'). Therefore the tip of this actuator (81) is fixed to a slot (53a) disposed over the mobile head (5) (illustrated in Figure 6). The other actuator (82) is fastened to the mobile head (5) and is used for increasing the compressive force of the mobile head and supporting the first actuator (81) during deburring. In other words, the second actuator (82) is used for providing an extra support force to the first actuator (81) during deburring process.

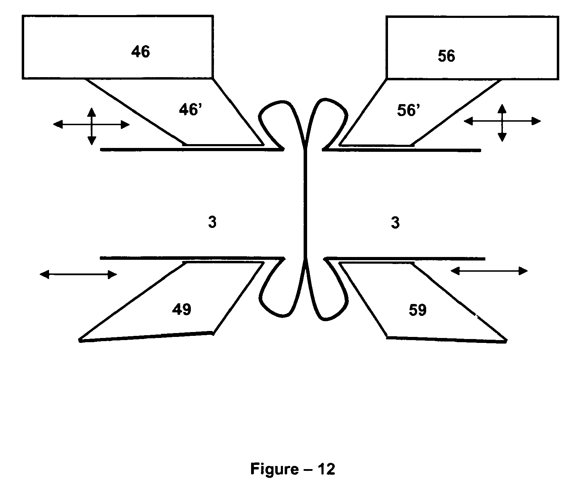

The method applied for butt-welding the profiles (3) or the operation manner of the machine (A) can be described as follows. After each mobile thrust plate (61) is pushed in between the stationary and mobile heads (4, 5), the profiles (3) are placed over the leaning surfaces (42, 52) so that their butts are leaned against these plates (61) and their lateral surfaces onto the side thrusts (41, 51). Then, the upper presser plates (45, 55) are leaned against the upper side of the profiles, restricting the displacement thereof. Afterwards, the mobile thrust plates (61) are removed from between the profiles (3) for the sites on which welding is to be performed, and the gap that emerges resultantly is filled by heater plates (64). Heater plates (64) heat the butt surfaces of profiles (3), melting these surfaces to some extent. Right after this step, the heater plates (64) are retracted, the mobile heads (5) are driven close to the stationary heads (4) so that the butt surfaces of profiles are leaned against each other. The material over the butt surfaces which is now melted to some extent flows out as a result of the press exerted by the mobile heads (5) and becomes solidified with cooling. Meanwhile, the butt surfaces keep cooling and the welding operation at their joints is completed. The next step, i.e. the deburring step, is described as following by referring to the schematic illustration in Figure 12.

Figure 12 is a schematic cross-sectional illustration of butt-welded profiles (3), prior to the deburring operation. The cutting mechanisms (46, 56), as referred to hereinabove, are capable of displacing down- and upwards (towards or away from the profiles (3)) and forth and back (towards or away from the welding site). The cutting blades (46', 56') disposed at the tip of said mechanisms (46, 56) are used in cutting the burrs. With this purpose, the blades (46', 56') first lean against the upper surfaces of profiles (3) as a result of the drive of the mechanisms (46, 56), are then moved towards the burrs. Before the burrs do not completely cool down and become solidified, the blades (46', 56') are reciprocated, displaced alternately back- and forth at least once (preferably a multiple times) mutually, slimming down and weakening the burrs. After the burrs completely cool down and become solidified, the blades (46', 56') perform a final action, by which they displace against each other and remove the burrs, and subsequently, displace upwards and leave the profile's (3) upper surface. The said movement is performed upwardly only by blades (46', 56') with the aim of removing burrs. During this time, the position of the mechanism (46, 56) is steady. Thanks to actuator-supported up- and downward movement devices (not illustrated in figures) in each mechanism (46, 56), the blades (46', 56') can make small moves upwards and downwards. With the blades' (46, 56') moving upwards following the removal of burrs, the burrs on the upper surface are cleaned. To remove the burrs remaining on the lower surface of the profiles (3), different methods can be applied. One of the said methods is similar to the one performed for the removal of burrs on the upper surface. In this method, while the burrs on the upper part are removed, the lower blades (49, 59) below the profiles (3) perform the same reciprocating movement of said blades (46', 56') and deburr the lower surface. To this effect, the lower blades (49, 59) should be also moved back and forth by an actuator (not illustrated in figures). In another method for the removal of burrs on the lower part, the said blades (49, 59) are fixed directly to the heads (4, 5) (without an actuator). In such a case, the burrs on the lower part are cleaned to a large extent by the first pressure of mobile head (5) (the pressure exerted while driven against the stationary head (4)). In some cases, in order to provide a complete removal, mobile head (5) requires the compressive power of the above-mentioned second actuator (82) as well. Thanks to this support, the mobile head (5) pushes against the stationary head and as a result of the said pressure, burrs on the lower part are also removed with a very small move. The advantage of the second method is that no extra actuator is needed for the blades (49, 59). Thanks to these deburring methods, deburring traces are minimized and a clean welding site is achieved. As for the cut burrs, they are removed from the welding site by blowing air thereto with a blower mechanism (not illustrated in figures) located at the unit (1). After the upper and lower burrs are removed, the mechanism (46, 56) and upper presser plates (45, 55) leave the upper surfaces of the profiles (3) as a whole by means of actuators (44, 54).

The surfaces of aforesaid blades (46', 56', 49, 59) are made conforming to the surfaces of the profile (3) over which they operate, providing maximum deburring at the welding site, thus cleaning the welding site more efficiently as compared to the results obtained according to the prior art.

## Claims

1. A method for welding and deburring plastic-based profiles, comprising the following steps, respectively, of
i. resting the butt surfaces of two profiles (3) to a mobile thrust plate (61) and fixing, i.e. immobilizing said profiles (3) by means of one stationary head and one mobile head (4, 5);
ii. retracting the thrust plate (61) and then driving a heater plate (64) in place of said thrust plate (61) so that the butt surfaces of said profiles (3) are melted;
iii. bringing close one profile (3) by means of said mobile head (5) to another profile (3) held by means of the stationary head (4), thereby resting the butt surfaces of said profiles (3) against each other and conducting the butt-welding process;
iv. positioning the cutting blades (46', 56') disposed one each at the tip of one cutting mechanism (46, 56) provided at each head (4, 5), on the upper surface of said profiles (3);
v. reciprocating said upper blades (46', 56') against each other, so that they are displaced alternately back and forth at least once to slim down the burrs, before the burrs which occur during the butt welding process do not completely cool down and become solidified;
vi. after the burrs are completely cooled down and solidified, reciprocating said upper blades (46', 56') for a final action against each other, so that the burrs are removed.

2. A method according to Claim 1, **characterized in that**, while the upper blades (46', 56') slim down the burrs, the blades (49, 59) provided under the profiles (3) and one disposed at each head (4, 5) are reciprocated against each other at least once, so that the burrs at the lower side are slimmed down.

3. A method according to Claim 2, **characterized in that**, after the burrs do completely cool down and become solidified, said blades (49, 59) are reciprocated against each other for a final action so that the burrs at the lower side are removed.

4. A method according to Claim 2, **characterized in that** said blades (49, 59) can be driven by means of one respective actuator.

5. A method according to Claim 1, **characterized in that** the burrs remaining under the profiles (3) are cut, while the mobile head (5) is driven against the stationary head (4), together with the blades (49, 59) fixed thereto (4, 5).

6. A method according to Claim 1, **characterized in that** the blades (46', 56') are removed from the upper surface of profiles following the deburring operation.

7. A method according to any of the claims 1, 3, 5, **characterized in that** the burrs which are cut are removed by means of blowing air thereon.

8. A method according to any of the claims 1, 2, 5, **characterized in that** the blades (46', 56', 49, 59) are shaped so as to entirely clean or trim the profile (3) surfaces over which they act.

9. A method according to Claim 1, **characterized in that** the lateral surfaces of the profiles (3) are placed on the leaning surfaces (42, 52) disposed at the stationary and mobile heads (4, 5), so as to rest against the lateral side thrusts (41, 51) provided thereat (4, 5).

10. A method according to Claim 2 or 5, **characterized in that** the blades (49, 59) disposed at the lower side of profiles (3) are positioned aside the leaning surfaces (42, 52).

11. A method according to Claim 1, **characterized in that** the profiles (3) are compressed and fastened by means of mobile upper presser plates (45, 55) at said heads (4, 5) from their upper sides (3).

12. A method according to Claim 11, **characterized in that** the upper presser plates (45, 55) are disposed aside the cutting mechanisms (46, 56).

13. A method according to Claim 12, **characterized in that** said upper presser plates (45, 55) are driven by means of one actuator (44, 54) each coupled to a column (43, 53) disposed at each head (4, 5).

14. A method according to Claim 13, **characterized in that** the upper presser plates (45, 55) and cutting mechanisms (46, 56) are fastened to connection elements (48, 48'; 58, 58') sliding over at least one track (47, 57), each disposed on the lateral surfaces of the columns (43, 53).

15. A method according to Claim 1, **characterized in that** said mobile head (5) is supported by means of respective tracks (50') on a table (7) through at least one skid (50) provided at the lower surface of said head (5).

16. A method according to Claim 1, **characterized in that** said mobile thrust plate (61) is driven by means of an actuator (62).

17. A method according to Claim 16, **characterized in that** said mobile thrust plate (61) is disposed on a skid (63) borne or supported by a track (63') on said table (7).

18. A method according to Claim 1, **characterized in that** said heater plate (64) is driven by means of an actuator (65).

19. A method according to Claim 18, **characterized in that** said heater plate (64) is disposed on a skid (66) borne by a track (66') on said table (7).

20. A method according to Claim 1, **characterized in that** said mobile head (5) is driven by means of an actuator (81).

21. A method according to Claim 20, **characterized in that** the compressive force of said mobile head (5) is provided by means of a second actuator (82).

## Patentansprüche

1. Verfahren zum Schweißen und Entgraten von auf Kunststoff basierenden Profilen, umfassend die jeweiligen folgenden Schritte:
I. Anlegen der Stoßflächen zweier Profile (3) an eine mobile Druckplatte (61) und Fixieren, das heißt Immobilisieren, der Profile (3) mittels eines einzigen stationären und eines einzigen mobilen Kopfes (4, 5),
II. Zurückziehen der Druckplatte (61) und nachfolgendes Vortreiben einer Heizplatte (64) an den Ort der Druckplatte (61), sodass die Stoßflächen der Profile (3) geschmolzen werden,
III. Annähern des einen Profils (3) mittels des mobilen Kopfes (5) an das andere Profil (3), gehalten mittels des stationären Kopfes (4), wodurch die Stoßflächen der Profile (3) gegeneinander anliegen, und Durchführen des Stoßschweißprozesses,
IV. Positionieren der Schneidklingen (46', 56'), die jeweils an der Spitze eines Schneidemechanismus (46, 56) vorgesehen an jedem Kopf (4, 5) angeordnet sind, auf der oberen Fläche der Profile (3),
V. Hin- und Herbewegen der oberen Klingen (46', 56') gegeneinander, sodass sie abwechselnd wenigstens einmal nach vorne und nach hinten versetzt werden, um die Grate abzunehmen, bevor die während des Stumpfschweißprozesses auftretenden Grate ganz vollständig abkühlen und verfestigen,
VI. Hin- und Herbewegen der oberen Klingen (46', 56') in einer finalen Aktion gegeneinander, nachdem die Grate vollständig abkühlen und verfestigen, sodass die Grate entfernt werden.

2. Verfahren nach Anspruch 1, **dadurch gekennzeichnet, dass** während die oberen Klingen (46',56') die Grate abnehmen, die Klingen (49, 59), die unter den Profilen (3) vorgesehen sind und an jedem Kopf (4, 5) angeordnet sind, gegeneinander wenigstens einmal hin- und herbewegt werden, sodass die Grate an der Unterseite abgenommen werden.

3. Verfahren nach Anspruch 2, **dadurch gekennzeichnet, dass**, nachdem die Grate vollständig abgekühlt und verfestigt sind, die Klingen (49, 59) in einer finalen Aktion gegeneinander hin- und herbewegt werden, sodass die Grate an der unteren Seite entfernt werden.

4. Verfahren nach Anspruch 2, **dadurch gekennzeichnet, dass** die Klingen (49, 59) mittels eines entsprechenden Aktuators angetrieben werden können.

5. Verfahren nach Anspruch 1, **dadurch gekennzeichnet, dass** die unter den Profilen (3) verbleibenden Grate geschnitten werden, während der mobile Kopf (5) gegen den stationären Kopf (4) verfahren wird, zusammen mit den daran fixierten Klingen (49, 59).

6. Verfahren nach Anspruch 1, **dadurch gekennzeichnet, dass** die Klingen (46', 56) nach dem Entgratungsvorgang von der oberen Fläche der Profile entfernt werden.

7. Verfahren nach einem der Ansprüche 1, 3, 5, **dadurch gekennzeichnet, dass** die geschnittenen Grate mittels Aufblasen von Luft darauf entfernt werden.

8. Verfahren nach einem der Ansprüche 1, 2, 5, **dadurch gekennzeichnet, dass** die Klingen (46', 56', 49, 59) so geformt sind, dass sie die Flächen der Profile (3), auf denen sie agieren, vollständig befreien oder entgraten.

9. Verfahren nach Anspruch 1, **dadurch gekennzeichnet, dass** die seitlichen Flächen der Profile (3) an den Stützflächen (42, 52) angeordnet werden, die an den stationären und mobilen Köpfen (4, 5) angeordnet sind, sodass sie gegen die seitlichen Seitenschübe (41, 51), die daran (4, 5) vorgesehen sind, stoßen.

10. Verfahren nach Anspruch 2 oder 5, **dadurch gekennzeichnet, dass** die Klingen (49, 59), die an der unteren Seite der Profile angeordnet sind, neben den Stützflächen (42, 52) positioniert werden.

11. Verfahren nach Anspruch 1, **dadurch gekennzeichnet, dass** die Profile (3) mittels mobiler oberer Druckplatten (45, 55) an den Köpfen (4, 5) von ihren oberen Seiten (3) aus gepresst und befestigt werden.

12. Verfahren nach Anspruch 11, **dadurch gekennzeichnet, dass** die oberen Druckplatten (45, 55) neben den Schnittmechanismen (46, 56) angeordnet sind.

13. Verfahren nach Anspruch 12, **dadurch gekennzeichnet, dass** die oberen Druckplatten (45, 55) mittels eines einzigen Aktuators (44, 54) angetrieben werden, der jeweils mit einer Säule (43, 53), angeordnet an jedem Kopf (4, 5), verbunden ist.

14. Verfahren nach Anspruch 13, **dadurch gekennzeichnet, dass** die oberen Druckplatten (45, 55) und die Schnittmechanismen (46, 56) an Verbindungselementen (48, 48', 58, 58') befestigt sind, die über wenigstens eine Laufbahn (47, 57) gleiten, jeweils angeordnet an den seitlichen Flächen der Säulen (43, 53).

15. Verfahren nach Anspruch 1, **dadurch gekennzeichnet, dass** der mobile Kopf (5) mittels entsprechender Laufbahnen (50') an einem Tisch (7) durch wenigstens eine Gleitschiene (50), die an der unteren Fläche des Kopfes (5) vorgesehen ist, gestützt wird.

16. Verfahren nach Anspruch 1, **dadurch gekennzeichnet, dass** die mobile Druckplatte (61) mittels eines Aktuators (62) angetrieben wird.

17. Verfahren nach Anspruch 16, **dadurch gekennzeichnet, dass** die mobile Druckplatte (61) auf einer Gleitschiene (63) angeordnet ist, die an einer Laufbahn (63') auf dem Tisch (7) getragen oder gestützt wird.

18. Verfahren nach Anspruch 1, **dadurch gekennzeichnet, dass** die Heizplatte (64) mittels eines Aktuators (65) angetrieben wird.

19. Verfahren nach Anspruch 18, **dadurch gekennzeichnet, dass** die Heizplatte (64) auf einer Gleitschiene (66) angeordnet ist, die durch eine Laufbahn (66') auf dem Tisch (7) getragen wird.

20. Verfahren nach Anspruch 1, **dadurch gekennzeichnet, dass** der mobile Kopf (5) mittels eines Aktuators (81) angetrieben wird.

21. Verfahren nach Anspruch 20, **dadurch gekennzeichnet, dass** die Druckkraft des mobilen Kopfes (5) mittels eines zweiten Aktuators (82) erbracht wird.

## Revendications

1. Procédé de soudage et d'ébarbage de profilés à base de matière plastique, comprenant respectivement les étapes suivantes
i. repos des surfaces de bout de deux profilés (3) contre une plaque de poussée mobile (61) et fixation, c'est-à-dire immobilisation desdits profilés (3) à l'aide d'une tête stationnaire et d'une tête mobile (4, 5) ;
ii. retrait de la plaque de poussée (61) puis amenée d'une plaque chauffante (64) en place de ladite plaque de poussée (61) de sorte que les surfaces de bout desdits profilés (3) soient fondues ;
iii. rapprochement d'un profilé (3) à l'aide de ladite tête mobile (5) d'un autre profilé (3) maintenu à l'aide de la tête stationnaire (4), repos par là même des surfaces de bout desdits profilés (3) l'une contre l'autre et réalisation du processus de soudage bout à bout ;
iv. positionnement des lames de coupe (46', 56') disposées chacune sur le bout d'un mécanisme de coupe (46, 56) prévu sur chaque tête (4, 5), sur la surface supérieure desdits profilés (3) ;
v. mouvement alternatif desdites lames supérieures (46', 56') l'une contre l'autre, de sorte qu'elles soient déplacées alternativement vers l'avant et l'arrière au moins une fois pour affiner les ébarbures, avant que les ébarbures qui apparaissent pendant le processus de soudage de bout à bout ne refroidissent complètement et ne se solidifient ;
vi. après le refroidissement complet et la solidification des ébarbures, mouvement alternatif desdites lames supérieures (46', 56') pour une action finale l'une contre l'autre, de sorte que les ébarbures soient retirées.

2. Procédé selon la revendication 1, **caractérisé en ce qu'**alors que les lames supérieures (46', 56') affinent les ébarbures, les lames (49, 59) prévues sous les profilés (3) et une lame disposée sur chaque tête (4, 5) sont déplacées alternativement les unes contre les autres au moins une fois, de sorte que les ébarbures sur le côté inférieur soient affinées.

3. Procédé selon la revendication 2, **caractérisé en ce qu'**après le refroidissement complet et la solidification des ébarbures, lesdites lames (49, 59) sont déplacées alternativement l'une contre l'autre pour une action finale de sorte que les ébarbures sur le côté inférieur soient retirées.

4. Procédé selon la revendication 2, **caractérisé en ce que** lesdites lames (49, 59) peuvent être entraînées à l'aide d'un actionneur respectif.

5. Procédé selon la revendication 1, **caractérisé en ce que** les ébarbures restant sous les profilés (3) sont coupées alors que la tête mobile (5) est entraînée contre la tête stationnaire (4), conjointement avec les lames (49, 59) fixées dessus (4, 5).

6. Procédé selon la revendication 1, **caractérisé en ce que** les lames (46', 56') sont retirées de la surface supérieure des profilés suite à l'opération d'ébarbage.

7. Procédé selon l'une quelconque des revendications 1, 3, 5, **caractérisé en ce que** les ébarbures qui sont coupées sont retirées en soufflant de l'air dessus.

8. Procédé selon l'une quelconque des revendications 1, 2, 5, **caractérisé en ce que** les lames (46', 56', 49, 59) sont formées de sorte à nettoyer entièrement ou à lisser les surfaces de profilé (3) sur lesquelles elles agissent.

9. Procédé selon la revendication 1, **caractérisé en ce que** les surfaces latérales des profilés (3) sont placées sur les surfaces inclinées (42, 52) disposées sur les têtes stationnaires et mobiles (4, 5), de sorte à reposer contre les surfaces de poussée (41, 51) côté latéral prévues dessus (4, 5).

10. Procédé selon la revendication 2 ou 5, **caractérisé en ce que** les lames (49, 59) disposées sur le côté inférieur des profilés (3) sont positionnées à l'écart des surfaces inclinées (42, 52).

11. Procédé selon la revendication 1, **caractérisé en ce que** les profilés (3) sont comprimés et fixés à l'aide de plaques de serrage supérieures mobiles (45, 55) sur lesdites têtes (4, 5) depuis leurs côtés supérieurs (3).

12. Procédé selon la revendication 11, **caractérisé en ce que** les plaques de serrage supérieures (45, 55) sont disposées à l'écart des mécanismes de coupe (46, 56).

13. Procédé selon la revendication 12, **caractérisé en ce que** lesdites plaques de serrage supérieures (45, 55) sont entraînées à l'aide d'un actionneur (44, 54), chacun étant couplé à une colonne (43, 53) disposée sur chaque tête (4, 5).

14. Procédé selon la revendication 13, **caractérisé en ce que** les plaques de serrage supérieures (45, 55) et les mécanismes de coupe (46, 56) sont fixés à des éléments de liaison (48, 48' ; 58, 58') coulissant sur au moins une voie (47, 57), chacune étant disposée sur les surfaces latérales des colonnes (43, 53).

15. Procédé selon la revendication 1, **caractérisé en ce que** ladite tête mobile (5) est supportée à l'aide de voies respectives (50') sur une table (7) par au moins un patin (50) prévu sur la surface inférieure de ladite tête (5).

16. Procédé selon la revendication 1, **caractérisé en ce que** ladite plaque de poussée mobile (61) est entraînée à l'aide d'un actionneur (62).

17. Procédé selon la revendication 16, **caractérisé en ce que** ladite plaque de poussée mobile (61) est disposée sur un patin (63) soutenu ou supporté par une voie (63') sur ladite table (7).

18. Procédé selon la revendication 1, **caractérisé en ce que** ladite plaque chauffante (64) est entraînée à l'aide d'un actionneur (65).

19. Procédé selon la revendication 18, **caractérisé en ce que** ladite plaque chauffante (64) est disposée sur un patin (66) soutenu par une voie (66') sur ladite table (7).

20. Procédé selon la revendication 1, **caractérisé en ce que** ladite tête mobile (5) est entraînée à l'aide d'un actionneur (81).

21. Procédé selon la revendication 20, **caractérisé en ce que** la force de compression de ladite tête mobile (5) est fournie à l'aide d'un second actionneur (82).
